# EUROPEAN PATENT APPLICATION

(11) **EP 2 785 081 A1**
(43) Date of publication of application: **01.10.2014**
(21) Application number: 12850907.2
(22) Date of filing: 13.03.2012
(51) Int. Cl.: H04W 4/16

(54) **MISSED CALL PROMPTING SYSTEM AND METHOD**

(30) Priority: 21.11.2011 CN 201110371502
(71) Applicant: ZTE Corporation, Shenzhen, Guangdong 518057 (CN)
(72) Inventor: YANG, Chuncheng, Shenzhen Guangdong 518057 (CN); PENG, Guanglei, Shenzhen Guangdong 518057 (CN); ZHOU, Tao, Shenzhen Guangdong 518057 (CN); ZOU, Xudong, Shenzhen Guangdong 518057 (CN)
(74) Representative: Rapisardi, Mariacristina
(86) International application number: PCT/CN2012/072265
(87) International publication number: WO 2013/075429

(57) **Abstract**

Disclosed are a system and method for providing a missed call alert. The system for providing the missed call alert includes: a call access module configured to receive a missed call calling signalling from a core network; a signalling identification module configured to analyse the missed call calling signalling, and acquire the call type of the missed call calling signalling, wherein the call type includes: a type of voice call and a type of video call; and an alert issuing module configured to send missed call alert information to the called party, wherein the missed call alert information includes the call type. The system for providing the missed call alert may not only notify the called party that there is a missed call but may also notify the called party of the incoming call type, so that a user may distinguish the call type of the missed call calling signalling when viewing the missed call alert information, which is convenient for the user to select a proper call method to call back. The utilization rate of the missed call system is improved, and the user experience is also improved at the same time.

## Description

### Technical Field

The present invention relates to communications, in particular to a system and method for providing a missed call alert.

### Background

A missed call alert service is a service based on a called party. When the called party is in a busy, power off or non-available state, a call from the calling party is forwarded to a missed call alert system, the called party is notified of call information when the called party is available, thus ensuring that the call information about the calling party and the called party will be not lost. The service provides better user experience for the user. With the development of the 3G service, video telephones are being popularized, and users are paying more attention to the video telephones.

Compared to a voice telephone, the video telephone enables the calling party and the called party to communicate better with each other, but the current missed call alert service may only support voice calling.

In the relevant technology, when the called party satisfies a condition of missed call notification, the missed call is forwarded to the system for providing a missed call alert, and the system for providing a missed call alert buffers missed call information about the user but is not able to buffer in a separated manner according to the missed call type; the system for providing a missed call alert sends a short message to alert the user when the state of the user is available; however, the system maynot distinguish call types, and a video call or a voice call maynot be distinguished by the message alert. The existed system for providing a missed call alert may only adapt the same alert for a voice call and a video call, and maynot give different alert according to the call types, so that the user may only call back in a manner of voice calling when learning that there is a missed call, maynot obtain better user experience.

### Summary

According to the embodiments of the present invention, a system for providing a missed call alert and method are provided, and the system for providing a missed call alert may give different alerts according to the call type.

According to one aspect of an embodiment of the present invention, a system for providing a missed call alert is provided. The system for providing a missed call alert includes: a call access module configured to receive a missed call calling signalling from a core network; a signalling identification module configured to analyse the missed call calling signalling, and acquire a call type of the missed call calling signalling, wherein the call type includes: a type of voice call and a type of video call; and a signalling identification module configured to send missed call alert information to the called party, wherein the missed call alert information includes the call type.

The above-mentioned signalling identification module is also configured to analyse the missed call calling signalling and acquire an identifier of a calling party and an identifier of the called party corresponding to the missed call calling signalling; and the system for providing a missed call alert further comprises: a database, configured to store user data; a service processing module, connected to the signalling identification module and the database respectively, configured to authenticate the called party and the calling party according to the identifier of the called party, the identifier of the calling party and the user data, so as to detect whether to activate the alert issuing module.

The above-mentioned system for providing a missed call alert further comprises: an alert integration module, connected between the alert issuing module and the service processing module, and configured to classify and integrate missed alerting information in a predetermined interval according to the identifier of the calling party and the call type.

The above-mentioned signalling identification module is also configured to analyse the missed call calling signalling, so as to obtain a reason that the called party is not available; and the system for providing a missed call alert further comprises: a sound playing module, connected to the service processing module, configured to playing a sound of the reason that the called party is not available for the calling party after receiving a sound playing task issued by the processing module.

The above-mentioned system for providing a missed call alert further comprises: an interface module, connected to the database, configured to receive an instruction to carry out an operation on the database, wherein the instruction comprises at least one of the following: an account opening instruction, an account cancellation instruction and a user state information modification instruction.

According to another aspect of the embodiments of the present invention, a method for providing the missed call alert is provided. The method for providing the missed call alert includes: receiving a missed call calling signalling from a core network; analysing the missed call calling signalling, and acquiring the call type of the missed call calling signalling, wherein the call type includes: a type of voice call and a type of video call; and sending missed call alert information to the called party, wherein the missed call alert information includes the call type.

After analysing the missed call calling signalling, the method further comprises: acquiring an identifier of a calling party and an identifier of a called party corresponding to the missed call calling signalling; and authenticating the called party and the calling party according to the identifier of the called party, the identifier of the calling party and user data pre-stored in a database, so as to detect whether to activate the alert issuing module.

Before sending missed call alert information to the called party, the method further comprises: classifying and integrating missed call alert information in a specific interval according to the identifier of the calling party and the call type.

After analysing the missed call calling signalling, the method further comprises: acquiring the reason that the called party is not available; and playing a sound of the reason that the called party is not available for the calling party after receiving a playing prompt instruction.

The above-mentioned method further comprises: receiving an instruction to carry out an operation on the database, wherein the instruction comprises at least one of the following: an account opening instruction, an account cancellation instruction and a user state information modification instruction.

By means of the embodiments of the present invention, the call type of the missed call calling signalling is acquired by analysing the received missed call calling signalling, and the missed call alert information including the call type is sent to the called party, by adding a call access module, a signalling identification module and a signalling identification module; the system for providing a missed call alert may not only notify the called party that there is a missed call, but also may notify the call type, so that the user may distinguish the call type of the missed call calling signalling when viewing the missed call alert information, thus the user selects a proper calling method to call back. Hence, the utilization rate of the missed call system is improved, and the user experience is also improved at the same time.

### Brief Description of the Drawings

Drawings, provided for further understanding of the embodiments of the present invention and forming a part of the specification, are used to explain the present invention together with embodiments of the present invention rather than to limit the present invention. In the drawings:
Fig. 1 is a block diagram of the structure of a system for providing a missed call alert according to an embodiment of the present invention;
Fig. 2 is a block diagram of the structure of a system for providing a missed call alert according to a preferred embodiment of the present invention;
Fig. 3 is a schematic diagram of system architecture comprising the system for providing a missed call alert shown in Fig. 1 and other communication systems according to a preferred embodiments of the present invention;
Fig. 4 is a schematic diagram of interfaces between the system for providing a missed call alert and other communication systems according to a preferred embodiment of the present invention;
Fig. 5 is a flowchart of a method for providing the missed call alert according to an embodiment of the present invention; and
Fig. 6 is a flowchart of a method for providing the missed call alert according to a preferred embodiment of the present invention.

### Detailed Description of the Embodiments

The present invention is described below with reference to the accompanying drawings and embodiments in detail. Note that, the embodiments of the present invention and the features of the embodiments may be combined with each other if there is no conflict.

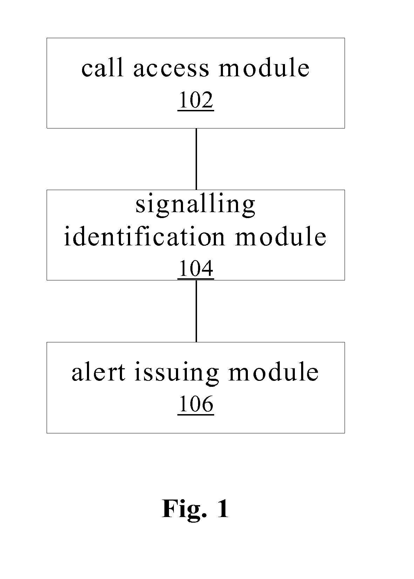

Fig. 1 is a block diagram of the structure of a system for providing a missed call alert according to an embodiment of the present invention. As shown in Fig. 1, the system for providing a missed call alert comprises:
a call access module **102,** configured to receive a missed call calling signalling from a core network;
a signalling identification module **104,** configured to analyse the missed call calling signalling to obtain a call type of the missed call calling signalling, wherein the call type includes a type of voice call and a type of video call; and
an alert issuing module **106,** configured to send missed call alert information to a called party, wherein the missed call alert information includes the call type.

In the relevant technology, the system for providing a missed call alert may only notify the called party that there is a missed call, and maynot give different alert according to the call type, rending low user experience. By the embodiments, a signalling identification module is configured to analyse a received missed call calling signalling, so as to acquire the call type of the missed call calling signalling, and the missed call alert information including the call type is sent to a user equipment; the system for providing a missed call alert may not only notify the called party that there is a missed call, but may also give different alerts according to the call type, so that the user may distinguish the call type of the missed call calling signalling when viewing the missed call alert information, thus the user selects a proper calling method to call back. The utilization rate of the system for providing a missed call alert is improved, and the user experience is also improved at the same time

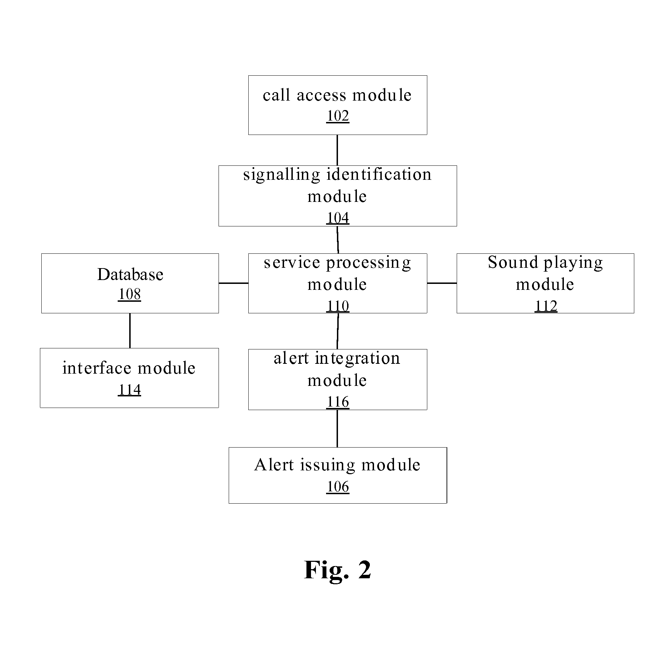

Preferably, the signalling identification module **104** of the above-mentioned system for providing a missed call alert may further be configured to analyse the missed call calling signalling and acquire an identifier of the calling party and an identifier of the called party corresponding to the missed call calling signalling; and as shown in Fig. 2, the system for providing a missed call alert may further comprise: a database **108,** configured to store user data; a service processing module **110,** connected to the signalling identification module **104** and the database **108** respectively, and configured to authenticate the called party and the calling party according to the identifier of the called party, the identifier of the calling party and the user data, so as to detect whether to activate the alert issuing module.

In a preferred implementation, the database **108** is configured to store user data and missed call data for the calling party and the called party, and the data may be registration information about the calling party, registration information about the called party, for example. During authentication of the service processing module **110,** items of the authentication may comprise: searching in the database to determine whether the called number is a registered user in the system for providing a missed call alert, to determining whether the state of the called party is a service pause state, and to determining whether a number of the calling party lists on a blacklist. If all of the above-mentioned items of authentication are passed, further authentication may be selectively performed, and the authentication item may be set as required. If no further authentication is set, missed alert information may be issued to the called party after the above-mentioned authentication is passed.

It may be seen that the system for providing a missed call alert to which the database **108** and the service processing module **110** may optimize the alerting process of the system for providing a missed call alert via the pre-stored user data, improving the performance of the system.

Preferably, as shown in Fig. 2, the system for providing a missed call alert may further comprise: an alert integration module **116,** connected between the alert issuing module **106** and the service processing module **110,** and configured to classify and integrate the missed call alerting information in a predetermined interval according to the identifier of the calling party, the identifier of the called party and the call type. The system for providing a missed call alert with the alert integration module **116** may summarize voice calls and video calls in a separated manner when integrating notification messages for the missed call alert; accordingly, different message content may be constructed according to different call types and different calling parties buffered in the system for providing a missed call alert, when constructing the notification message. Calling time for calls, the number of calls and types of calls may also be uniformly summarized, wherein the calls are from the same calling party. Calls from different calling parties may also be uniformly summarized and be notified to the user with a short message or by means of a call, reducing a waste of system resources, and also avoiding the trouble brought to the user by interrupting the user with a plurality of short messages.

Preferably, the signalling identification module **104** in the above-mentioned system for providing a missed call alert is also configured to analyse the missed call calling signalling, so as to obtain the reason that the called party is inaccessible; and as shown in Fig. 2, the above-mentioned system for providing a missed call alert may further comprise: a sound playing module **112,** connected to the service processing module **110,** and configured to playing the sound of the reason that the called party is not available for the calling party after receiving a sound playing task issued by the service processing module **110.**

In a preferred implementation, the system for providing a missed call alert with an sound playing module **112** may provide a sound playing alert on the calling party when the called party is in an inaccessible state. The sound playing alert may play the sound of the reason that the called party is not available, and may also merely alert the calling party that the called party is not available. If the user selects to leave a message when the called party is not available, the message may be a voice message or a video message; content of the message may be issued to the called party, so that the called party may learn that the calling party wants to have a call with the called party when the called party is not available. If the user selects to hang up, the called party will receive the message learning missed called information about the calling party. By involving the sound playing function, the user may be informed a reason that the called party is not available, and it is convenient to leave a message or hang up. Therefore, the user experience is improved.

Preferably, the above-mentioned system for providing a missed call alert may further comprise: an interface module **114,** connected to the database **108,** configured to receive an instruction to carry out an operation on the database 108, wherein the instruction comprises at least one of the following: an account opening instruction, an account cancellation instruction and a user state information modification instruction. In one embodiment, the system for providing a missed call alert with the interface module **114** may modify the user data in the database 108 at any time, enabling information about the calling party and the called party more accurate, further enabling the missed call alert information more accurate.

It should be noted that the signalling identification module **104** and the alert integration module **116** are core modules of the system for providing a missed call alert as shown in Fig. 2. The signalling identification module **104** may process a missed call, and acquire a call type, information about the calling and the called party, for example. The alert integration module **116** may perform classification and integration according to different call types. Therefore, the system for providing a missed call alert provided in the embodiments of the present invention may distinguish call types, integrate the call types, and give the user missed call alert information with different alert, so that the called party may start a call to the calling party according to the call types, effectively improving the user experience.

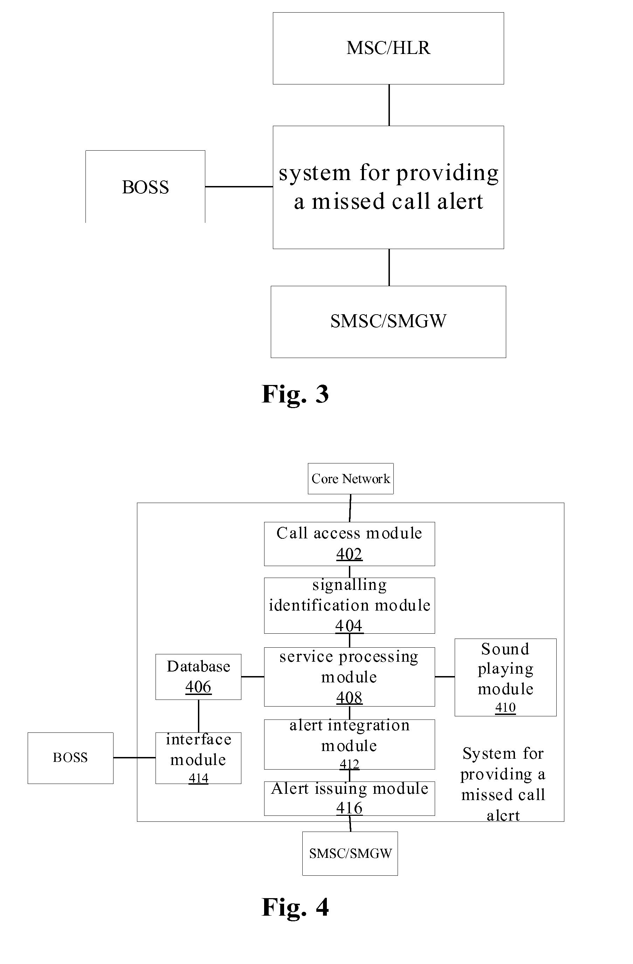

Fig. 3 is a schematic diagram of system architecture comprising the system for providing a missed call alert shown in Fig. 1 and other communication systems according to a preferred embodiment of the present invention. As shown in Fig. 3, the system for providing a missed call alert shown in Fig. 1 should be provided with the following interfaces, so as to exchange information with the core network, the BOSS (business and operation support system) and SMCC/SMGW (short message service center/ short message gateway), realizing issuing of the missed call information:
an interface for interaction with the core network (which may be the above-mentioned call access module **102):** the system for providing a missed call alert of the preferred embodiment is based on a call forwarding service, and relies on the core network. When a calling party dials a called party, the called party is a user in the system for providing a missed call alert, and the called party is in a state of power off, or a state of out of coverage, for example, the core network will redirect the missed call to the system for providing a missed call alert.

An interface for interaction with the BOSS system (which may be the above-mentioned interface module **114):** the account opening and account cancellation of the system for providing a missed call alert are both processed by the BOSS system. Information is processed by the BOSS and is then sent to the system for providing a missed call alert. The interface module in the system for providing a missed call alert will process the account opening and the account cancellation.

An interface for interaction with the SMSC/SMGW (which may be the above-mentioned alert issuing module **106):** a notification message generated by the system for providing a missed call alert in the preferred embodiment is issued via the SMSC/SMGW with the SMPP protocol.

As shown in Fig. 4, the system for providing the missed call alert shown in Fig. 3 may further comprise the following module:
an call access module **402** (equivalent to the above-mentioned call access module **102),** configured to access a call from the core network. The calling party calls the called party, and if the called party is in a state of power off, or a state of out of coverage, for example, and the core network determines that the called party is to be notified that there is a missed call, the call is redirected to the system for providing the missed call alert. The call access module **402** interacts with the core network and the signalling identification module **404,** receives various signalling from the core network, converts the various signalling into internal signalling of the system for providing the missed call alert, and accesses the call and sends the internal signalling to the signalling identification module **404.**

The signalling identification module **404** (equivalent to the above-mentioned signalling identification module **104)** interacts with the call access module **402** and the service processing module **408,** and is configured to obtain calling party information, called party information, a call transfer reason and a call type by analysis, and to submit the information to the service logic processing module for processing. By introducing the signalling identification module, the user may be provided with a more accurate notification message for alerting the missed call, so that the user initiates a corresponding call according to the missed call type and calls back.

Database **406** (equivalent to the above-mentioned database **108)** is configured to store service relevant data. In one embodiment, the service relevant data may include system data, service data and user data, for example. The service logic processing module **408** needs to acquire corresponding information from the database **406** in both cases of authentication processing and service logic processing.

The service processing module **408** (equivalent to the above-mentioned service processing module **110)** is configured to process service logic. After the signalling identification module **404** reports the call information to the service processing module **408,** the service processing module **408** searches in the database **406** to determine whether the called number is a registered user in the system for providing the missed call alert, determine whether the user state is a pause state, and determine whether a number of the called party lists on a blacklist. If all authentication is passed, the missed call information will be sent to an alert integration module **412.** After acquiring the call transfer reason, the service processing module **408** controls the sound playing module **410** to play a sound, thus the sound of the reason that the called is not available may be played for the calling party.

The sound playing module **410** (equivalent to the above-mentioned sound playing module **112)** is configured to receive a control signal from the service processing module **408,** and plays the sound for the calling party after receiving the signalling. After the service processing module **408** sends the missed call information to the alert integration module **412,** integration may be performed by the alert integration module **412** (equivalent to the above-mentioned alert integration module **116)** according to the calling party information, the called party information and the call type. The purpose is to prevent the called party to be harassed by too much missed call alert messages. The alert integration module **412** may also realize single-calling-party integration, multi-calling-party integration, voice call and video call integration; and after the integration, a notification message may be generated and sent to the SMSC/SMGW. The SMSC/SMGW sends the missed call notification message to the called party.

An account opening and cancellation interface module **414** (equivalent to the above-mentioned interface module **114)** is responsible for interacting with the BOSS system, and accepts services. In one embodiment, the services may include account opening, account cancellation, user state information modification and user data modification, for example.

An alert issuing module **416** (equivalent to the above-mentioned alert issuing module **106)** is configured to, not limited to, issue an alert via a message. In another embodiment, the alert may be a multimedia message, for example.

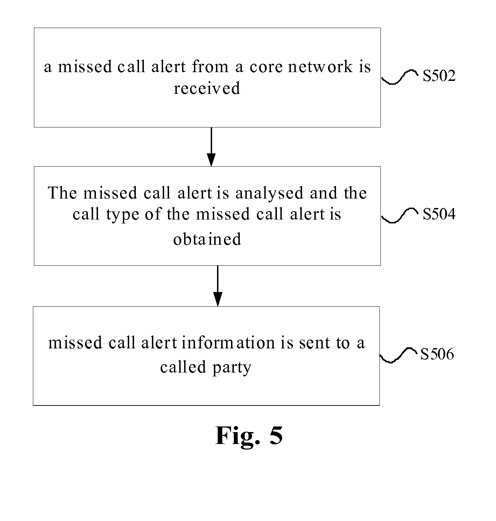

Fig. 5 is a flowchart of a method for providing a missed call alert according to an embodiment of the present invention. As shown in Fig. 5, the method for providing the missed call alert includes steps as follows:
step S502, a missed call calling signalling from a core network is received;
step S504, the missed call calling signalling is analysed and acquire the call type of the missed call calling signalling, wherein the call type includes a type of voice call and a type of video call; and
step S506, missed call alert information is sent to a called party, wherein the missed call alert information includes the call type.

After analysing the missed call calling signalling in step S504, the method may further comprise the following processing:
(1) an identifier of the calling party and an identifier of the called party corresponding to the missed call calling signalling are obtained; and
(2) the called party and the calling party are authenticated according to the identifier of the called party, the identifier of the calling party and user data pre-stored in a database, so as to detect whether to activate the alert issuing module.

Preferably, after analysing the missed call calling signalling, the method may further comprise the following processing:
(1) a reason that the called party is inaccessible is obtained; and
(2) a sound of the reason that the called party is inaccessible for the calling party is played after receiving a sound playing task.

Before step S506, the method may further comprise the following processing: missed call alert information in a predetermined interval is classified and integrated according to the identifier of the calling party and the call type.

Preferably, the above-mentioned method for providing the missed call alert may further comprise: receiving an instruction to carry out an operation on the database, wherein the instruction comprises at least one of the following: an account opening instruction, an account cancellation instruction and a user state information modification instruction.

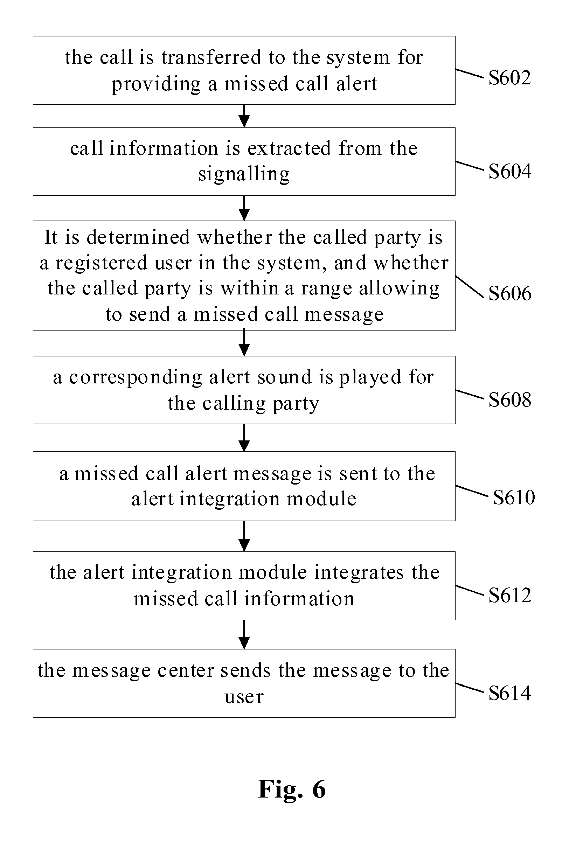

Fig. 6 is a flowchart of a method for providing a missed call alert according to a preferred embodiment of the present invention. As shown in Fig. 6, in combination with the above-mentioned system for providing the missed call alert shown in Fig. 2, the method for providing the missed call alert comprises the following processing:
step S602, when the calling party dials the called party (the called party is a user in the system for providing the missed call alert), and the called party is inaccessible for some reasons such as power off, out of coverage or being busy, the missed call alerting condition is satisfied at this time, and the call is redirected to the system for providing the missed call alert; and
step S604, the signalling identification module **104** in the system for providing the missed call alert extracts call information from the signalling. The call information may comprise: calling party information, called party information, call type, a call transfer reason and so on.
Step S606, the service processing module **110** in the system for providing the missed call alert detects whether a called number is a registered user of the system, and detects whether the called party is within a range allowing to send a missed call message. If the called number is a registered user of the system, then a missed call alert service is provided. The property of the calling party is detected, and if a number of the called party lists on a blacklist, the missed call message is not sent to the called party.
Step S608, the sound playing module **112** in the system for providing the missed call alert plays a corresponding alert sound for the calling party. The played alert sound may be determined according to the reason that the called party is inaccessible, for example, the called party is in a state of out of coverage, the called party is in a state of power off, for example. The played alert sound may also be a single alert sound, alerting the calling party that the called party is inaccessible.
Step S610, the service processing module **110** in the system for providing the missed call alert issues an alert message to the alert integration module.
Step S612, the alert integration module **116** in the system for providing the missed call alert integrates the missed call information. It is required to distinguish a video missed call and a voice missed call, to distinguish different calling parties, and issues the integrated missed call alert message to a message centre.
Step S614, the message centre sends the message to the user.

In conclusion, by means of the above-mentioned embodiments provided by the present invention, call types may be distinguished, and missed call integration may be performed according to the call types; and the system for providing the missed call alert issues different notifications. The system for providing the missed call alert may not only notify the called party that there is a missed call, but may also notify the called party of the call type of the calling party, so that the user may distinguish the call type of the missed call calling signalling when viewing missed call alert information. The user may better initiate a voice call back or a video call back actively. The system performance is improved, and the user experience is also improved at the same time.

Obviously, those skilled in the art should know that each of the mentioned modules or steps of the embodiments of the present invention may be realized by universal computing devices; the modules or steps may be focused on single computing device, or distributed on the network formed by multiple computing devices; selectively, they may be realized by the program codes which may be executed by the computing device; thereby, the modules or steps may be stored in the storage device and executed by the computing device; and under some circumstances, the shown or described steps may be executed in different orders, or may be independently manufactured as each integrated circuit module, or multiple modules or steps thereof may be manufactured to be single integrated circuit module, thus to be realized. In this way, the embodiments of the present invention are not restricted to any particular hardware and software combination.

The above description is only the preferred examples of the present document, which is not used to limit the present document. Any amendments, equivalent substitutions, improvements, etc. within the principle of the present invention are all included in the scope of the protection of the present invention.

## Claims

1. A system for providing a missed call alert, **characterized by** comprising:
a call access module configured to receive a missed call calling signalling from a core network;
a signalling identification module configured to analyse the missed call calling signalling to obtain a call type of the missed call calling signalling, wherein the call type comprises a type of voice call and a type of video call; and
an alert issuing module configured to send missed call alert information to a called party, wherein the missed call alert information comprises the call type.

2. The system according to claim 1, **characterized in that**
the signalling identification module is further configured to analyse the missed call calling signalling to obtain an identifier of a calling party corresponding to the missed call calling signalling and an identifier of the called party corresponding to the missed call calling signalling; and
the system for providing the missed call alert further comprises:
a database, configured to store user data; and
a service processing module, connected to the signalling identification module and the database respectively, configured to authenticate the called party and the calling party according to the identifier of the called party, the identifier of the calling party and the user data, and to detect whether to activate the alert issuing module.

3. The system according to claim 2, **characterized in that** the system for providing the missed call alert further comprises:
an alert integration module, connected between the alert issuing module and the service processing module, and configured to classify and integrate the missed alerting information in a predetermined interval according to the identifier of the calling party and the call type.

4. The system according to claim 2, **characterized in that**
the signalling identification module is further configured to analyse the missed call calling signalling to obtain a reason why the called party is inaccessible; and
the system for providing the missed call alert further comprises:
a sound playing module, connected to the service processing module, and configured to play a sound of the reason why the called party is inaccessible for the calling party after receiving a sound playing instruction issued by the service processing module.

5. The system according to claim 2, **characterized in that** the system for providing the missed call alert further comprises: an interface module, connected to the database, and configured to receive an instruction to carry out an operation on the database, wherein the instruction comprises at least one of the following: an account opening instruction, an account cancellation instruction and a user state information modification instruction.

6. A method for providing the missed call alert, **characterized by** comprising:
receiving a missed call calling signalling from a core network;
analysing the missed call calling signalling to obtain a call type of the missed call calling signalling, wherein the call type comprises a type of voice call and a type of video call; and
sending missed call alert information to a called party, wherein the missed call alert information comprises the call type.

7. The method according to claim 6, **characterized in that** after analysing the missed call calling signalling, the method further comprises:
obtaining an identifier of a calling party corresponding to the missed call calling signalling and an identifier of the called party corresponding to the missed call calling signalling; and
authenticating the called party and the calling party according to the identifier of the called party, the identifier of the calling party and the user data pre-stored in a database, and to detect whether to activate the alert issuing module.

8. The method of according to claim 7, **characterized in that** before sending missed call alert information to the called party, the method further comprises:
classifying and integrating the missed call alert information in a predetermined interval according to the identifier of the calling party and the call type.

9. The method according to claim 7, **characterized in that** after analysing the missed call calling signalling, the method further comprises:
obtaining a reason why the called party is inaccessible; and
playing a sound of the reason why the called party is inaccessible for the calling party after receiving a sound playing instruction.

10. The method according to claim 7, **characterized in that** the method further comprises: receiving an instruction to carry out an operation on the database, wherein the instruction comprises at least one of the following: an account opening instruction, an account cancellation instruction and a user state information modification instruction.
